# EUROPEAN PATENT APPLICATION

(11) **EP 0 781 584 A1**
(43) Date of publication of application: **02.07.1997**
(21) Application number: 96830519.3
(22) Date of filing: 11.10.1996
(51) Int. Cl.: B01D 29/03, B29C 47/68

(54) **Self-cleaning filtering unit, filtering system including this unit and filtering method carried out by the filtering system**

(30) Priority: 27.12.1995 IT MI952770
(71) Applicant: FARE' S.p.A., I-21054 Fagnano Olona Varese (IT)
(72) Inventor: Fare', Rosaldo, 21054 Fagnano Olona, Varese (IT)
(74) Representative: Cicogna, Franco

(57) **Abstract**

A filtering unit comprises cleaning elements for cleaning the filters, formed by a slider block on which are provided a cleaning channel as well as a cross access opening, for accessing the filters of the fluid material mass to be filtered.

The cross opening and channel can be arranged in mutually exchangeable positions, the replacing of the opening by the channel and vice-versa on the filters causing the material mass therethrough to be reversed due to a pressure difference therebetween.

The system made by combining at least two of the above disclosed filtering units and the filtering method carried out in this system allow to regenerate or recovering the filters in the same environment in which the filtering is performed according to a continuous cycle.

## Description

### BACKGROUND OF THE INVENTION

The present invention relates to a filtering unit for automatically cleaning filters and the like.

The invention also relates to a filtering system using the mentioned filtering unit, as well as to a filtering method carried out by this system.

As known, a filtering process is substantially a physical separating process in which solid waste and other impurities are separated from a liquid or fluid material mass in general.

For example, in a purifying process for purifying polymers for making fiber materials, yarns and plastic materials in general, the molten polymeric mass is supplied under pressure through filtering metal nets, adapted to trap therein ash material, paper, metals as well as other usual solid impurities.

The progressive accumulation of these impurities on the filters is such as to greatly reduce the efficiency of said filters, thereby the filters must be frequently replaced. Thus, conventional filtering systems have the drawback of a comparatively high maintenance cost, which can be mainly attributed to the frequent requirement of replacing the filters by other new or cleaned filters, as the operation of the filter being replaced is found as not satisfactorily efficient.

### SUMMARY OF THE INVENTION

Accordingly, the main object of the present invention is to provide a filtering unit allowing to recover the filters, by overcoming the prior art requirements of replacing said filters as they become inefficient due to an excessive accumulation of impurities.

A further object of the present invention is to provide such a filtering unit specifically designed for automatically starting the cleaning of the filters as a set impurity accumulation is found thereon.

A further object of the present invention is to provide a system specifically designed for performing the filtering and cleaning process on the filters, without the need of fully replacing said filters.

Yet another object of the present invention is to provide a continuously operating filtering process for filtering a fluid or liquid material mass and cleaning the related filters.

According to one aspect of the present invention, the above mentioned objects, as well as yet other objects which will become more apparent hereinafter, are achieved by a filtering unit according to the present invention, of the type provided with at least an inlet for a fluid material mass to be supplied under pressure to one or more filtering elements and at least an outlet for the filtered fluid material, and being substantially characterized in that said filtering unit is moreover provided with built-in cleaning means for cleaning said filtering element.

According to further features of the filtering unit of the present invention, said built-in cleaning means comprise an adjustable position cleaning channel, adapted to provide a passing path for the filtered fluid mass, in counter-current with respect to the mass to be filtered and toward a lower pressure environment, for discharging the impurities removed by said filtering element.

The mentioned filtering unit is further characterized by the provision therein of a slider block on which are provided the mentioned cleaning channel and a cross access opening, for allowing said fluid material mass to be filtered to access said filtering element, said cross opening and cleaning channel being adapted to be arranged at mutually exchangeable positions on said filtering element. To that end, and according to a further feature of the present invention, said filtering unit is also provided with a sliding housing base body for slidably housing said slider block, in a direction transversal with respect to the supplied direction, toward said filtering element, of said fluid material mass to be filtered.

The system for filtering under pressure a fluid material mass, which also constitutes a main aspect of the present invention, is characterized essentially by the fact said system is provided with at least two of said filtering units, each comprising a respective filtering element and a respective slider block operating as valve means. This system is moreover provided with an automatic control central unit for controlling said valve means, thereby, for a filtering unit having the valve means thereof switched to a position for cleaning the respective filtering element, there exists at least another filtering unit the valve means of which are arranged at a filtering position. This feature allows a continuous filtering process to be performed.

The filtering method, for filtering a fluid material supplied under pressure to filtering elements, which also constitutes a main aspect of the present invention, is characterized essentially by the fact said method comprises the step of cleaning said filtering elements by reversing the flow of said filtered fluid material, said flow reversal being promoted by a pressure drop on the side of the filtering elements restraining the impurities.

Thus, the filtering unit according to the present invention overcome the prior art requirements of disposing of the filter elements and replacing them with other new filtering elements as the filtering elements being replaced have collected such an impurity amount hindering a proper operation of this filtering elements.

Moreover, according to a main feature of the method according to the present invention, the filter cleaning process is automatically started, by exploiting a parameter (i.e. the pressure drop downstream of each filter) which, in addition to supplying the driving power to the filter cleaning operation, also constitutes an indicating element of the impurity level deposited on the filters. In particular, the system and method according to the present invention are very inexpensive construction and operation-wise, owing to the possibility of performing the cleaning operation of the filters inside the same filtering system, thereby it is frequently possible to fully recover the filtering elements.

### BRIEF DESCRIPTION OF THE DRAWINGS

The above mentioned as well as further features and advantages of the present invention will become more apparent from the following detailed disclosure of a preferred, though not exclusive, embodiment of the filtering unit and system according to the present invention which are illustrated, by way of an indicative but not limitative example, in the figures of the accompanying drawings, where:
Figure 1 is a perspective view illustrating the general construction of a filtering system according to the present invention,
Figure 2 is a top plan view illustrating the filtering system shown by figure 1,
Figure 3 illustrates the system shown in figure 1 during a filtering cycle process according to the present invention,
Figure 4 is a cross-sectional view, substantially taken along the cross-line IV-IV, illustrating a detail of a filtering unit of the system shown in figure 3,
Figure 5 illustrates the filtering system of figure 1 during the cleaning process according to the present invention, and
Figure 6 is a cross-sectional view, substantially taken along the line VI-VI, illustrating a detail of a filtering unit of the system shown in figure 5.

### DESCRIPTION OF THE PREFERRED EMBODIMENT

The following disclosure will be made with reference to a filtering process performed on a molten polymeric mass to be supplied to synthetic fiber making systems. However, it should be apparent that the invention is not limited to this specific application, since it can also be applied to any other liquid or fluid material in general, which is supplied under pressure to the filtering system.

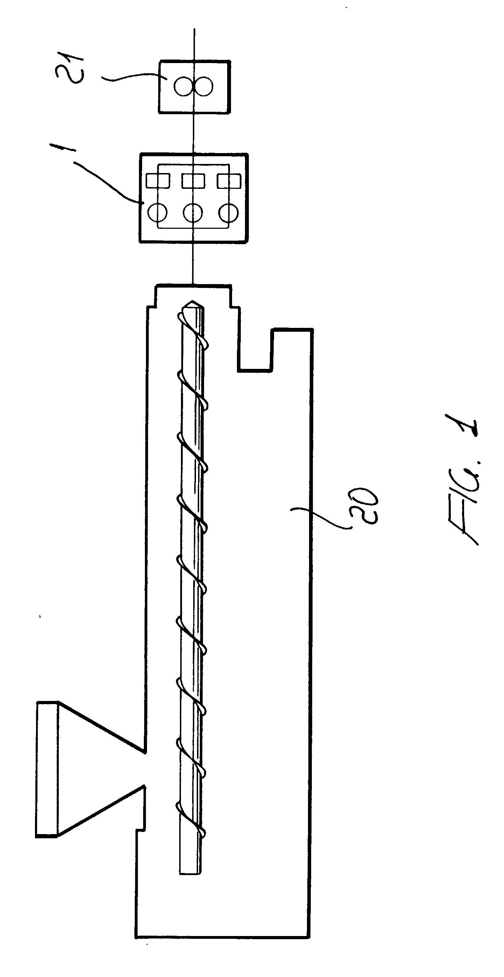

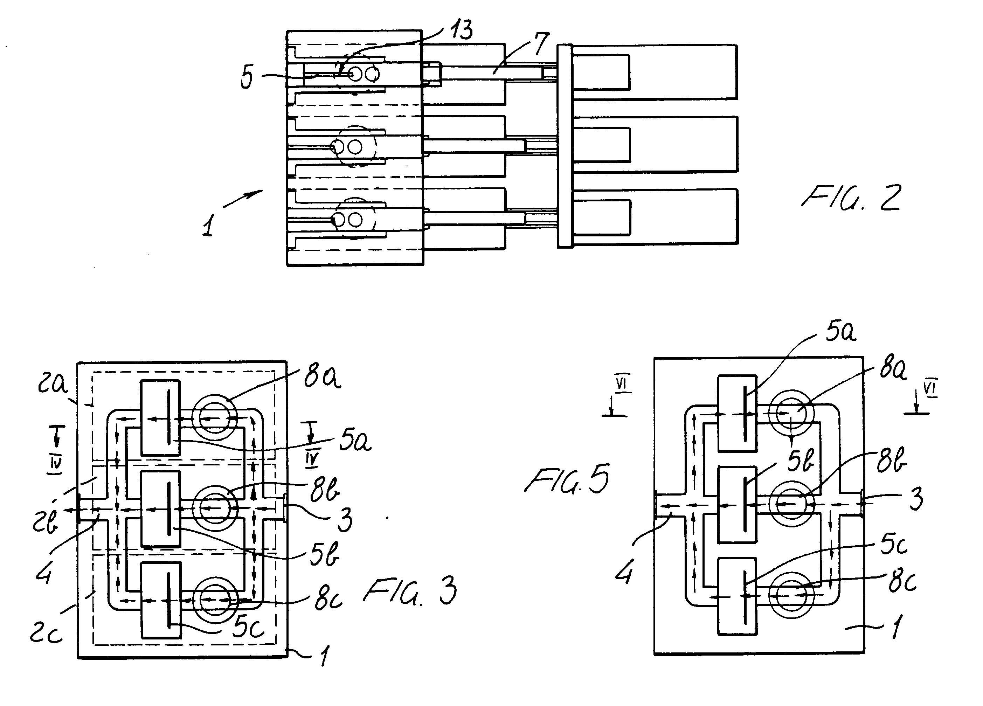

The filtering system according to the present invention has been indicated by the reference number 1 in figure 1. This system comprises an assembly including three self-cleaning filtering units 2a,2b,2c (see figure 3), each including a respective filtering element 5a,5b,5c and respective valve means 8a,8b,8c. This system has been specifically designed for filtering a fluid material mass, being supplied under pressure by means of an auger 20 to the inlet section 3 and being discharged, from the corresponding outlet section 4, to an utilizing unit 21. The two sections 3 and 4 fluid-communicate in turn with the corresponding sections 14 and 11 of the mentioned filtering units, as it will be explained in a more detailed manner hereinafter.

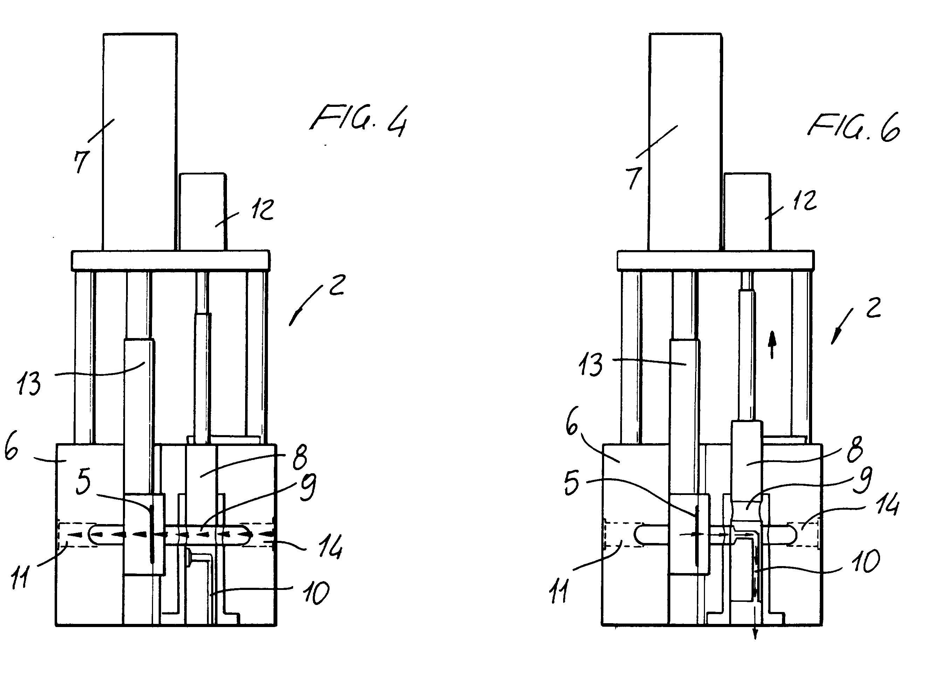

An example of the filtering unit used in the filtering system 1 according to the present invention is shown in figures 4 and 6. In particular, as is clearly shown in figure 4, the filtering unit 2 comprises a basic body 6, including an inlet 14 for a fluid material mass to be filtered, as well as an outlet 11 for the filtered material. Inside said basic body 6 is moreover provided a filtering element 5. This filtering element is in turn advantageously supported by a slide 13, actuated by a piston 7. In particular, as said piston or plunger 7 is operated, the filter 5 can be automatically withdrawn from the basic or base body 6, so as to allow said filter to be definitely replaced as it can not be further cleaned or regenerated.

As shown, the filtering unit 2 of figure 4 is moreover provided with valve means operating to control the mass flow to be processed. Said valve means, in particular, comprise a slider block 8, slidably housed inside said base body 6, so as to slide in a transversal direction with respect to the advancing direction of the fluid mass through the filter 5. As shown, said slider block 8 comprises:
- a cross hole or opening 9 for allowing the material to be filtered to pass through the inlet section 14 toward the inlet on the filter 5 (see the arrows of figure 4),
- a channel 10 separated by the preceding element, for discharging the fluid mass of cleaning material from the unit 2.

The disclosed slider block 8, in particular, is driven to be displaced, by a cylinder-piston assembly 12, between the positions shown in figures 4 and 6, i.e. between:
- a filtering position in which said cross opening 9 communicates the inlet 14 of the mass to be filtered (figure 4) with the filter 5; and
- a filter cleaning position in which the body of the slider block 8 closes the above mentioned inlet channel 14; in particular, in this position the slider block 8 will moreover communicate, through the above mentioned discharging or outlet channel 10, the filter section on which are collected the waste materials and other filtering impurities in general, with a lower pressure environment (advantageously the atmospheric pressure environment, see figure 6), or with a negative pressure environment, or with a vacuum environment.

Thus by means of the disclosed displacement of the slider block or valve means 8 inside the filtering unit 2 will be provided two different circuits:
- a filtering circuit defined by the channel 14 - cross opening 9 - filter 5 - channel 11 assembly; in this circuit, the mass to be filtered is supplied under pressure to the channel 14 and exits the filter 5 at a smaller pressure, due to the load lost through the filtering element and due to the impurities collected thereon; and
- a filter cleaning circuit, formed by the channel 11 - filter 5 - channel 10 assembly; in such a circuit, as stated, the channel 10 will communicate the filter section 5, on which the waste materials and other impurities separated in the preceding filtering operation will be collected, with a lower pressure environment (advantageously the atmospheric pressure or a less pressure) with respect to that in which said filter is arranged.

Suitable sensing devices or sensors (not shown) are moreover provided, for detecting the pressure difference, upstream and downstream the filter 5, for example at the inlet 3 and outlet 4 of the system shown in figure 3. The subject system is moreover provided with timer devices (not shown) for controlling the filter cleaning time and for recovering the slider block 8 to the filtering position thereof (figure 4).

The above disclosed filtering units operates as follows:

### Filtering step

The molten polymeric mass is supplied under pressure, through the channel 14, to the filter 5 of the filtering unit 2 of figure 4. During this step, the slider block 8 is arranged in its position shown in figure 4, thereby allowing the mass to be filtered to arrive at the filter 5, by passing through the mentioned cross opening 9. The supply pressure of the channel 14 is such as to overcome any pressure drop through the filter 5, which will cause a cleaned product mass to be collected downstream of said filter 5.

### Cleaning step

As the filtering process continues, on the filtering element 5 will be collected impurities contributing to an increasing of the pressure drop or load loss on the fluid mass passing through said filtering element. As the pressure drop downstream of the filter 5 achieves a set value, the above mentioned sensing or detecting devices will cause the piston 12 to be driven in the direction of the arrow F in figure 6. Because of this displacement, the mentioned channel 10 will be brought to a position which will provide the disclosed filter cleaning circuit. Thus, the environment of the filter 5, which corresponds to that on which are deposited the filtering waste materials (right side of figure 6), will be quickly communicated with a much smaller pressure environment (preferably an atmospheric pressure environment or a negative-pressure environment). Thus, on that portion of the cleaning circuit corresponding to said channel 10 a sudden pressure drop will be generated. This will in turn cause the polymeric mass flow to which is now directed from the channel 11 to the channel 10 to be immediately reversed, by passing through the filter 5. Accordingly, the latter will be traversed, in a counter current relationship with respect to the preceding filtering step, by a cleaned fluid material flow thereby removing any impurities from said filter 5. Finally, this mass will be discharged from the channel 10 (and, accordingly, outside of the filtering unit 2). After a set time period, as controlled by the mentioned timing devices, the filter cleaning cycle will be interrupted and the filtering operation proper will be recovered, because of the automatic displacement of the slider block 8 to a position in which the hole 9 is opened on the supply 14 (figure 4).

The continuity of the filtering process on the mass to be filtered, which occurs simultaneously with the disclosed filter unit cleaning operation, is assured by the system being shown in figures 3 and 5 (which, as stated, comprises three filtering units 2a,2b,2c of the type disclosed with reference to the preceding figures 4 and 6). To that end, the system is further provided with an automatic control central unit (not shown) for automatically controlling the valve means 8a,8b,8c thereby, for a filtering unit 2a having the respective valve means 8a in a cleaning position on the filtering element 5a, will exist at least another filtering unit the valve means whereof are arranged in a filtering position.

In particular, this process or method is carried out as follows.

With the filters 5a,5b,5c being new and cleaned, the pressure on the inlet section 3 will be, for example of 100 bars, whereas the pressure on the outlet 4 will be, for example, of 80 bars (figure 3). Accordingly, the pressure drop downstream of the filters will be of 20 bars, and it will be detected by the disclosed sensing devices. After a given filtering operation time, which will depend on the impurity amount entrained by the mass to be filtered, this pressure drop will increase and, as it reaches a set value (for example 40 bars), then the mentioned sensing device will cause the cleaning cycle of the filter 5a on the filtering unit 2a to be started. This operation step is actuated by the withdrawal, through the filter 5a, of the cleaned fluid mass present in the channel 4. During this step, the remaining units 2b and 2c will remain in their filtering operation mode (figure 5).

After a set period of time, as controlled by said timing devices, the unit 2a will be recovered to the filtering operation. Simultaneously, the unit 2b will be brought to a cleaning operation or step, by the same procedure which has been disclosed for the filtering unit 2a.

At the end of the filter 5b cleaning step, this latter will be brought again to a filtering step, whereas the filter 5c will be in turn brought to a cleaning step.

At this time, all the filtering units of the system will operate in a filtering mode, as far as the pressure detector on the section 4 will detect a further pressure drop, for a set value of which the disclosed cleaning filter operation will be automatically recovered.

The invention, as disclosed and illustrated, is susceptible to several modifications and variations which, however, will come within the scope of the accompanied claims. In particular, the means for driving the cursor block 8 and slides 13 can be of a different type (for example of a screw, lever or other type), and moreover the number and arrangements of the filtering units inside the filtering system can be selected according to requirements. Furthermore, the filtering and filtering cleaning cycles performed by the single filtering units can be provided in a different sequence provided that the continuity of the process is maintained. In addition, the filtering units and the supply of the material to be filtered can be differently embodied and the used filtering means can be selected according to the contingent requirements.

## Claims

1. A filtering unit, of the type provided with at least an inlet for a fluid material mass to be supplied under pressure to one or more filtering elements and at least an outlet for a filtered fluid material, characterized in that said filtering unit comprises moreover built-in cleaning means for cleaning said filtering element.

2. A filtering unit according to claim 1, characterized in that said built-in cleaning means comprise an adjustable position cleaning channel adapted to provide a path for the pressurized filtered fluid material, in counter-current with respect to the material to be filtered and toward a smaller pressure environment, for discharging the impurities removed by the filtering element.

3. A filtering unit according to claim 2, characterized in that said filtering unit is provided with a slider block including said cleaning channel and a cross access opening, for allowing access to said filtering element of said fluid material mass to be filtered, said cross opening and channel being adapted to be arranged in mutually exchangeable positions on said filtering element.

4. A filtering unit according to Claim 3, characterized in that said filtering unit comprises a base body for slidably housing said slider block, in a transversal direction to the supply direction, toward said filtering element, of said fluid material mass to be filtered.

5. A filtering unit according to Claim 4, characterized in that said slider block is driven by driven means to operate between the following positions:
a filtering position in which said cross opening is arranged between said inlet and said filtering element, thereby providing a path for the pressurized fluid mass toward said filtering element; and
a filtering element cleaning position in which said slider block closes said inlet and locates said cleaning channel at said filtering element on the section of the latter receiving the impurities separated during the filtering step.

6. A filtering unit according to claim 5, characterized in that said filtering unit comprises moreover pressure sensing devices arranged upstream and downstream of said filtering element, said sensing devices being adapted to control said driving means in said cleaning position of said slider block, as a set value of a pressure drop of said filter fluid mass arranged downstream of said filtering element is achieved.

7. A filtering unit according to Claim 5, characterized in that said filtering unit comprises moreover timing control means for controlling the cleaning time of said filtering element and actuating said driving means in said filtering position of said slider block.

8. A filtering unit according to Claim 5, characterized in that said driving means for driving said slider block comprise double-action cylinder-piston assemblies or the like.

9. A filtering unit according to Claim 2, characterized in that said smaller pressure environment is an atmospheric or negative pressure environment.

10. A system for filtering under pressure a fluid material mass, characterized in that said system comprises at least two filtering units according to claim 1.

11. A system according to Claim 10, characterized in that said system comprises three filtering units, each formed by a respective filtering element and a respective slider block or valve means, said system comprising moreover an inlet section and an outlet section for said filtered fluid mass, said sections being moreover in fluid communication with the corresponding sections of each of said filtering units.

12. A system according to Claim 11, characterized in that said system comprises moreover an automatic control central unit for controlling said valve means thereby, for a filtering unit with the valve means thereof at a cleaning position for cleaning said filtering element, exist at least another filtering unit the valve means of which are arranged at a filtering position.

13. A method for filtering a fluid material supplied under pressure to filtering elements according to Claim 1, characterized in that said method comprises a cleaning step for cleaning said filtering element by reversing the flow of said filtered fluid material, said flow reversal being promoted by a pressure drop on a side of the filtering elements restraining the impurities.

14. A method according to Claim 13, characterized in that said method comprises moreover th steps of:
detecting a pressure drop downstream of said filtering elements, in the supply direction, towards said filtering elements, of said fluid material to be filtered; and
as a set value of said pressure drop is reached, opening, on a side of said filtering element restraining said impurities, a low pressure path for said cleaning flow.

15. A method according to Claim 14, characterized in that said pressure in said cleaning flow path is an atmospheric pressure or a smaller pressure.

16. A method according to Claim 14, characterized in that said filtering element filtering and cleaning steps are performed simultaneously.

17. A method according to Claim 16, characterized in that said method is carried out by a system according to Claim 10.

18. A method according to Claim 13, characterized in that said fluid material to be filtered comprises a molten polymer to be processed in systems for making synthetic fibers and yarns.

19. A method according to Claim 13, characterized in that said fluid material to be filtered is a molten polymer for making plastic products in general, either pure or regenerated.
